# EUROPEAN PATENT APPLICATION

(11) **EP 1 008 310 A1**
(43) Date of publication of application: **14.06.2000**
(21) Application number: 99123506.0
(22) Date of filing: 25.11.1999
(51) Int. Cl.: A41B 11/12, A41D 27/24, B29C 65/18

(54) **Clothing with a sag-preventive member and a device and a method for manufacturing a clothing with a sag-preventive member**

(30) Priority: 04.12.1998 JP 34503198
(71) Applicant: NISSHINBO INDUSTRIES INC., Chuo-ku, Tokyo (JP)
(72) Inventor: Nakamura, Satoshi, c/o Nisshinbo Ind.Inc Tokushima, Tokushima-shi, Tokushima (JP); Kurosaki, Kenji, Osaka-shi, Osaka (JP)
(74) Representative: Sajda, Wolf E., Dipl.-Phys.

(57) **Abstract**

Disclosed are a clothing with a sag-preventive member as well as a device and a method for manufacturing such a clothing. The sag-preventive member is installed in such a manner that a layer sheet (1) comprising an adhesive layer (12) having an adhesive strength or degree of tackiness and flexibility, and a film layer (11) are mounted on the respective clothing (2) with the film layer (11) facing the cloth (2) side.

## Description

The invention relates to a clothing with a sag-preventive member as well as a device and a method for manufacturing such a clothing with a sag-preventive member.

A typical example of clothing with a sag-preventive member is a stocking. As a traditional sag-preventive member for such a stocking, a silicone rubber may directly be coated on the inner surface of the stocking in the vicinity of its opening, whereupon the silicone is hardened.

However, since the traditional sag-preventive member is produced by directly coating it on the inner surface of the finished stocking material, the process for coating requires considerable time and efforts. Also, liquid silicone rubber becomes exuded on the outer surface of the stocking material which affects its appearance; furthermore, the thickness of the coated silicone rubber is not approximately uniform in every area, which gives an uncomfortable feeling to the user.

Moreover, the traditional sag-preventive member on the clothing has a traditional sag-resistance; however, it has no adhesive strength. Hence, if the traditional sag-preventive member is softly or loosely fit on human skin, for example, it does not function sufficiently to prevent sagging.

In addition, in another traditional process of manufacturing stockings, silicone rubber is coated on the material to provide the sag-preventive portion of the stocking in the vicinity of its opening, wherein the silicone rubber coated material is sewn on the stocking.

However, since the silicone rubber coated material and the stocking itself are different materials, the process is fairly complex and complicated, and it is a common problem that the colours of both materials do not perfectly match.

Accordingly, the object underlying the present invention is to resolve the problem specified above. Hence, the object of the present invention is to provide a clothing with an effective sag-preventive effect, to facilitate the manufacture of such a sag-preventive member, and to provide a sag-preventive member with an approximately even surface.

According to a first aspect of the present invention, a clothing with a sag-preventive member is provided, wherein a layer sheet, comprising an adhesive layer which has an adhesive strength or degree of tackiness and flexibility, and a film layer which has flexibility, is installed on the clothing with the film layer facing the clothing.

According to a further development of the clothing according to the invention, the layer sheet is sewn on the clothing.

According to a further development of the clothing according to the invention, the film layer is made of hot-melt materials, wherein the film layer is welded on the clothing.

According to a still further development of the clothing according to the invention, the layer sheet is provided with vent holes.

According to another aspect of the present invention, a clothing with a sag-preventive member is provided, wherein a layer sheet, comprising an adhesive layer with an adhesive strength or degree of tackiness and flexibility and a film layer which has flexibility and is hot-meltable, is welded on the inner surface of the clothing with the film layer facing the clothing.

According to another aspect of the present invention, a method for manufacturing a clothing with a sag-preventive member is provided, wherein a layer sheet is used which comprises an adhesive layer which has an adhesive strength or degree of tackiness and flexibility, and a film layer which has flexibility, and wherein the layer sheet is installed on the clothing with the film layer facing the clothing.

According to a further aspect of the method according to the invention, the layer sheet is sewn on the clothing.

According to another development of the method according to the invention, the film layer is a hot-melt material, and the film layer is welded on the clothing.

According to another aspect of the present invention, a method for manufacturing a clothing with a sag-preventive member is provided, wherein a layer sheet is used which comprises an adhesive layer which has an adhesive strength or degree of tackiness and flexibility, and a film layer which has flexibility and is hot-meltable, the layer sheet is mounted to cover a peripheral surface of a core member with the film layer facing opposite to the peripheral surface of the core member, wherein the peripheral surface of the core member is mounted to face the inner surface of the clothing, and wherein the clothing and the layer sheet are heated and pressed against each other so that the film layer is welded on the clothing.

According to another aspect of the present invention, a method for manufacturing a clothing with a sag-preventive member is provided, wherein a core member is covered with the clothing with the inner surface of the clothing wrapping around the peripheral surface of the core member, wherein a layer sheet, comprising an adhesive layer which has an adhesive strength or degree of tackiness and flexibility, and a film layer which has flexibility and is hot-meltable, is placed on the core with the film layer facing the clothing, and wherein the clothing and the layer sheet are heated to be pressed so that the film layer is welded on the clothing.

According to a still further aspect of the present invention, a device for manufacturing a clothing with a sag-preventive member is provided, wherein the device comprises a core member, which is covered by the inner surface of a clothing, a pressurizing member, which is adapted to press a layer sheet, comprising an adhesive layer with an adhesive strength or degree of tackiness and flexibility, and a film layer which has flexibility and is hot-meltable, and the clothing to be welded together, and heating means adapted to heat the film layer.

Further details, objects and advantages of the present invention will readily become apparent from the detailed description of preferred embodiments in connection with the accompanying drawings, wherein:
- Fig. 1: is an installation view of the layer sheet on the clothing by using a sewing step;
- Fig. 2: is an installation view of the layer sheet on the clothing by using a heating device;
- Fig. 3: is an installation view of the layer sheet on the clothing by using hot air;
- Fig. 4: is an explanation view of the layer sheet covering a core member;
- Fig. 5: is an installation view of the layer sheet on the clothing using the core member;
- Fig. 6: is an explanation view of the layer sheet covering the core member; and
- Fig. 7: is another installation view of the layer sheet on the clothing by using a core member.

In the following, some embodiments of the present invention will be explained in detail with reference to the drawings.

### Clothing with a sag-preventive member

Examples for a clothing with a sag-preventive member may be socks, stockings, brassieres, under short pants, pantyhoses, swimming wear, sport wear and the like. In the case of a stocking, for example, a sag-preventive member may be installed on the inner surface of the stocking in the vicinity of the opening, and when considering a brassiere as an example it may be installed on the inner circumferential surface of the brassiere.

The sag-preventive member comprises an adhesive layer which has an adhesive strength or degree of tackiness and flexibility, and a film layer which has flexibility. It prevents sagging of the clothing by its adhesive strength and adjusts itself as the clothing elongates and shrinks by its flexibility.

### Layer Sheet

A layer sheet is a sheet made by laminating an adhesive layer and a film layer, and is formed in various shapes, such as a constant width tape, circular sheet and polygonal sheet.

The adhesive layer has an adhesive strength or degree of tackiness and flexibility, and it is preferable that it regains its adhesive strength after washing as necessary. It may be provided and made in clear, white, or other colours, and the colour should be selected as applicable and convenient.

The adhesive strength is caused as the result of the contact between the adhesive layer and the object wearing it, such as human skin. Hence, there is a sufficient sagging frictional resistance between the adhesive layer and the object as well as a peeling force which prevents the adhesive layer from peeling or coming off from the object.

The adhesive strength against peeling off is preferably more than approximately 50 gf. In this context, reference is made to the explanation of an "Adhesive strength of 180 degrees peeling against the test plate", in "Testing method of pressure sensitive adhesive tapes and sheets", JIS-Z-0237 (1991).

The film layer has a flexibility which enables the sag-preventive member to be adjusted as the clothing elongates and shrinks, and a strength sufficient to maintain itself without cracking or breakage when the clothing elongates and shrinks. It may be provided and made in clear, white, or other colours, and the colours should be selected as applicable and convenient. In addition, if the film layer is designed to be a hot-melt material, the layer sheet with the film layer may be heated to be welded on the clothing.

For elongation in respect to flexibility of the layer sheet, the strength of the layer sheet is sufficient if the layer sheet on the clothing elongates and shrinks without cracking or breakage, and approximately 100% or more is preferable according to the explanation in "Testing method of pressure sensitive adhesive tapes and sheets", see JIS-Z-0237 (1991).

The layer sheet should be provided with vent holes which maintain a breathable condition. The vent hole ratio is the ratio of the vent holes relative to the surface area of the layer sheet, which may be determined as applicable and convenient, and may range from approximately 5% to 85%.

### Adhesive layer

The adhesive layer is to have an adhesive strength and flexibility, and it may be made of polymeric material. For example, a thermosetting or thermoplastic polyurethane, synthetic rubber, natural rubber, acrylic, silicone and the like may be used. For instance, a polyurethane adhesive layer may be composed of a combination of a polyol component and an isocyanate component.

For example, diol, triol, and tetraol may be employed as a polyol component having a molecular weight of approximately 200 to 5,000. For a diol component, polytetramethylene etherglycol is a typical component, in which ethylene oxide or propylene oxide is added regarding polyethylene glycol and diethylene glycol as starting materials. For triol, a component, in which ethylene oxide or propylene oxide is added regarding glycerol and trimethylolpropane as starting materials, may be employed.

For tetraol, a component regarding, for example, pentaerythritol, ethylene diamine, and toluene diamine as starting materials, may be employed. These polyols may be employed as a single component or a multi-component or may be combined with diol (etherglycol, 1.4-butadiol, 1.6-hexanediol, etc.) having a molecular weight of approximately 200 or less.

For an isocyanate component, 4.4'-diphenylmethane diisocyanate (MDI), xylilene diisocyanate, isophorone diisocyanate, hexamethylene diisocyanate, hydrogenation MDI, and the like may be employed. In addition, these isocyanates may be denaturated by a carbodiimide reaction. Further, a portion of these isocyanates may be a prepolymer with a polyol-reacted isocyanate base at its end.

A general catalyst, which supports an urethane-reaction, may be used. Typical catalysts are organic catalysts, organic lead catalysts, amine catalysts, carboxylates and the like. A component other than the catalyst, such as a blowing agent, surfactant, dye, pigment, weathering agent, plasticizer, dehydrating agent, and the like, may be adjoined to such a polyol component and isocyanate component as described above.

For instance, the polyol component may be prepared by GL-3000 (polyether polyol - Sanyo Kasei Co.): 73.0 weight-%, PEG-400 (polyether glycol - Sanyo Kasei Co.): 12.8 weight-%, DBTDL (dibutyltindilaurate) : 0.01 weight-%. The isocyanate component can be MDI (4.4'-diphenylmethane diisocyanate): 14.2 weight-%. Mixing such a polyol component and an isocyanate component results in an adhesive layer with an adhesive strength and flexibility.

### Film layer

The film layer has a sufficient flexibility and strength to maintain its properties without being cracked or broken while it is welded on the clothing. Polyurethane, polyethylene, polypropylene and the like may be employed for the film layer. The thickness may be determined by types of clothing and the respective applications, and it may be, for example, approximately 30 - 200 µm.

If the film layer is designed and adapted to be hot-meltable, this property facilitates the installation of the sag-preventive member on the clothing. The melting point of the hot-melt material depends upon the characteristics and manufacturing process of the clothing, and it may be, for example, approximately 100 °C to 180 °C.

For example, MF-150T-AH (Nisshinbo Industries Inc.) may be employed for a polyurethane film layer. The thickness of the layer may be approximately 150 µm, and the melting point of the layer may be approximately 130 °C.

### Manufacturing a layer sheet

A layer sheet is a sheet made by laminating an adhesive layer and a film layer. For the above-described urethane layer, in the method of manufacturing the layer sheet, a polyol component is prepared and approximately 142 g of isocyanate MDI is added to approximately 858.1 g of that polyol component. Then, the mixture of the polyol component and the isocyanate component is well mixed for approximately 30 seconds.

Next, the mixture is applied on the film layer. For example, in the method of the application, the mixture is applied on the hot-melt polyurethane film layer of approximately 500 millimeters x 4 meters (500 mm x 4 m) to create a thickness of approximately 0.5 mm. The mixture applied layer is maintained horizontal and is heated to approximately 80 °C for approximately 5 minutes so that the applied polyurethane adhesive layer may be cured. Although the thickness of the adhesive layer in this example is about 0.5 mm, it may be decided and varied as types and applications of clothing change.

It is convenient to affix a mould releasing paper on the adhesive layer of the finished layer sheet, and the layer sheet is cut in approximately 25 mm width to manufacture a tape layer sheet which is approximately 4 m long.

In the following, a method of installing a sag-preventive member on a clothing is explained in detail.

### Installation by sewing

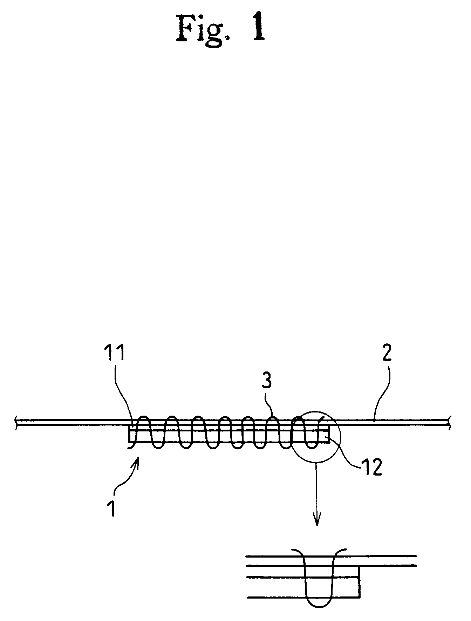

In the case of intalling a sag-preventive member on a clothing, a layer sheet 1 is used which comprises a film layer 11 on the one side and an adhesive layer 12 on the other side. Such a layer sheet 1 may be sewn on a cloth 2 by means of a thread 3, as shown in Fig. 1. At that time, the layer sheet 1 is designed to be mounted in such a manner that the film layer 11 of the layer sheet 1 faces the cloth 2 side and the adhesive layer 12 becomes a surface side.

### Installation by heating

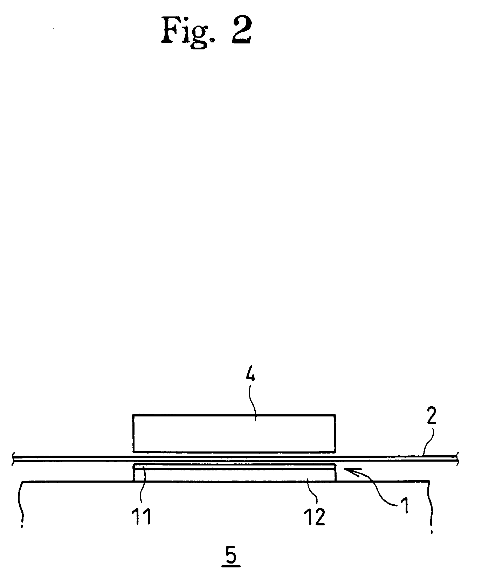

In such a case a corresponding layer sheet 1 is used which comprises a film layer 11 and an adhesive layer 12. In the case where the film layer 11 is a hot melt layer, for example, as shown in Fig. 2, the layer sheet 1 is placed on a base 5 with the film layer 11 facing upwards. Then, the cloth 2 of the clothing is placed on the layer sheet 1; thereafter, a heating device 4 is placed on the cloth 2 and presses against the cloth 2 and the film layer 11 for heating the film layer 11 to be melted.

However, depending upon the type of cloth, the cloth 2 may also be placed on the base 5. Then, the layer sheet 1 is placed on the cloth 2 with the film layer 11 facing downwards; thereafter, the heating device 4 is placed on the cloth 2 and presses against the cloth 2 and the film layer 11 for heating the film layer 11 to be melted in order to weld the layer sheet 1 on the cloth 2.

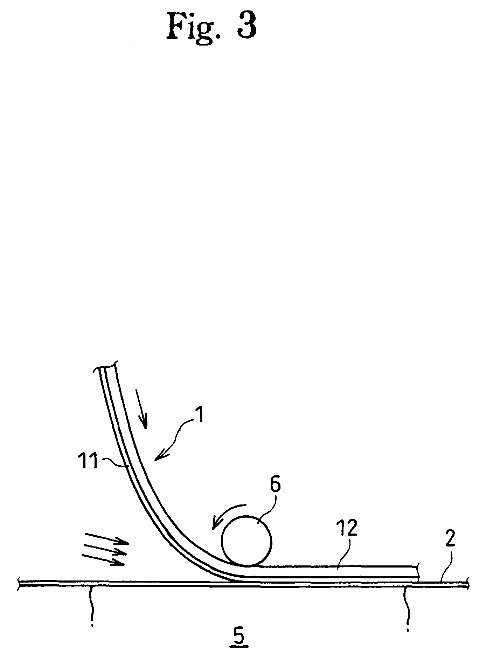

Another embodiment is shown in Fig. 3 of the drawings. In this case, the cloth 2 of the clothing and also the layer sheet 1 with the film layer 11 facing downwards, are placed on a base 5, and the layer sheet 1 is adapted to be pressed by the outer surface of a pushing roller 6.

As indicated by arrows in Fig. 3 of the drawings, a relative movement takes place between the layer sheet 1 on the one hand and the roller 6 on the other hand. In such a case, the roller 6 may be stationary, and the layer sheet 1 is moved along roller 6 through the nip between the roller 6 and the base 5. It is also possible to move the roller 6 along the base 5 with the layer sheet 1 in between so that the layer sheet 1 is pressed between them.

As indicated in Fig. 3, the layer sheet 1 is placed on the cloth 2 with the film layer 11 facing the cloth 2 and is adapted to be pulled downwardly with the roller 6 rotating around its longitudinal axis as indicated with an arrow in Fig. 3.

Hot air from heating means (not shown) is blown onto the film layer 11, as indicated by a triple arrow 11, to melt the film layer 11, and the roller 6 is rotating to quickly press the film layer 11 to be welded on the cloth.

In such an embodiment, the hot air is adjusted in accordance with the durability of the clothing relative to the cloth temperature, characteristics of the clothing, manufacturing speed and the like. The temperature of the hot air may be, for example, approximately 150 °C to 500 °C. For example, a device of the type "Hot Air Sealing" QHP-805, manufactured by Queen Light Co., Ltd. may be used.

### Installation with a core member

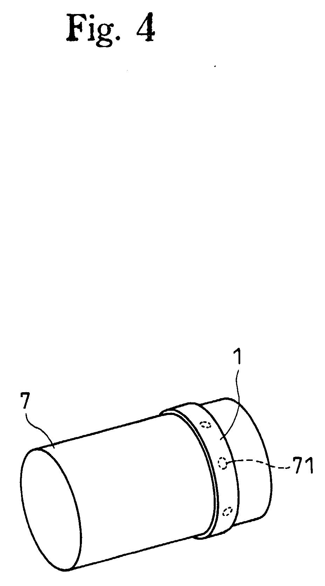

As shown in Fig. 4 of the drawings, a core member 7 covered by a cloth 2 of the clothing is prepared in a predetermined condition, and a hot-melt layer sheet 1 is installed on the core member 7 with its film layer 11 facing the surface side (opposite to the peripheral surface of the core member 7). In the area of the core member 7 where the layer sheet 1 is mounted, vent holes 71 may be formed, which facilitate the arrangement of the layer sheet 1 by sucking the layer sheet 1 from inside of the core member 7.

For the core member 7, at least a part of the core member 7 is covered by the cloth 2 of the clothing. The shape is determined by the corresponding types of clothing. As materials for the core member 7, iron, aluminum and resin, for example, may be employed.

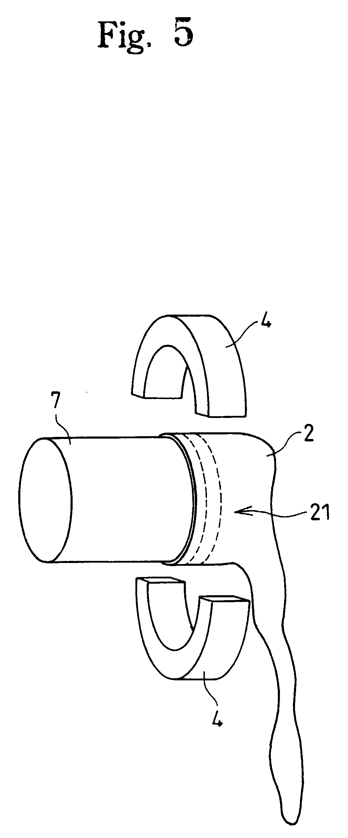

For a clothing with a tubular portion, such as a stocking, the core member 7 may be designed as a tubular member as shown in Fig. 5; then, the layer sheet 1 can easily be installed on the inner surface of the stocking adjacent to its opening 21.

In such a case, the opening 21 of the stocking is to cover the core member 7 from the one end thereof so that the layer sheet 1 may be located in a particular position of the opening 21 of the stocking. Next, a heating device 4 is placed on the stocking and presses the same for melting the film layer 11 to be installed on the inner surface of the stocking.

However, depending on the type of clothing, a stocking may be reversed from inside, and the film layer 11 of the layer sheet 1 as well as the adhesive layer 12 are arranged correspondingly. Then, the heating device 4 is placed on the adhesive layer 12 of the layer sheet 1 and presses the same for installation purposes.

The adhesive strength of the adhesive layer 12 to be installed on the stocking is preferably approximately 50 gf (gram force) or more, preferably approximately 100 gf or more. The upper limit is an amount which does not give an uncomfortable feeling to a user of such a clothing when taking it off. Further, the tensile elongation of the adhesive sheet is preferably approximately 100% or more and more preferably approximately 200% or more.

The heating device 4 with the heat generating function can be of any suitable type wherein materials such as iron, aluminum and any other suitable heatable materials may be employed. Also, as a heating device, a sheet heating element alone or a heating device with a heating element inside may be used provided that it supplies a sufficient heat generating function.

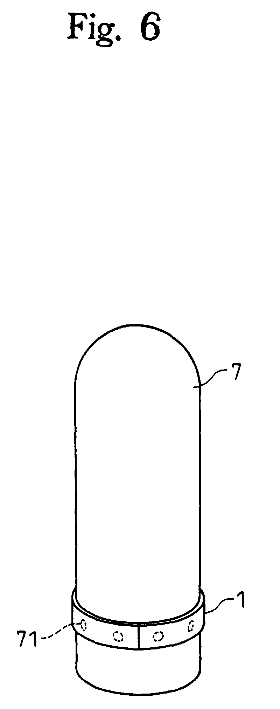

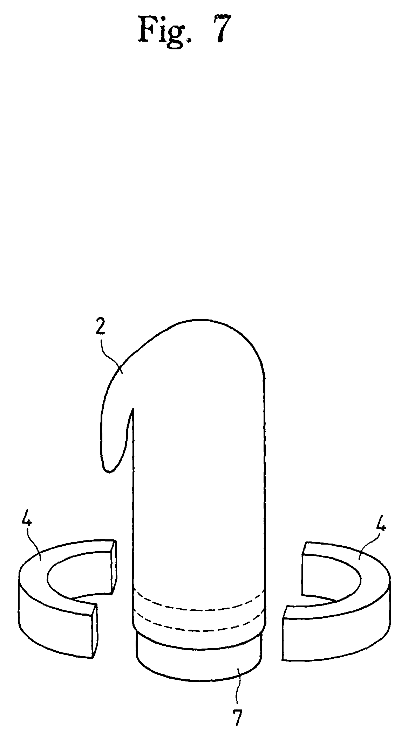

As schematically shown in Fig. 6 and 7 of the drawings, the layer sheet 1 may be installed on the clothing by placing the core member 7 vertically, setting the layer sheet 1 on the particular portion of the core member 7, covering the cloth on the core member 7 from the above, and heating the film layer 11 of the layer sheet 1 by the heating device 4. Further, depending upon the type of cloth, it is also possible that the cloth 2 be arranged underneath the layer sheet 1.

The invention presents various advantages which are summarized below:
- The sag-preventive member according to the invention has an adhesive strength or degree of tackiness of its own and therefore sagging is prevented without tightening the clothing on the object.
- The adhesive layer may be preset on the film layer. Hence, the thickness of the adhesive layer is uniform.
- If a film layer is provided as a hot-melt layer, the installation of the adhesive layer on the clothing is facilitated.
- If a hot-melt layer is used as the film layer, it is possible to avoid that a liquid silicone rubber is exuded on the outer surface of the cloth thereby maintaining its appearance.
- If a film layer is used which is prepared in a tape, the layer can be installed by sewing and the appearance is maintained.
- Since a layer sheet may be installed on a finished clothing, the manufacturing process is simplified and the colours of the materials can be matched.

It is readily apparent that the invention as described above presents various advantages of wide commercial utility. While specific forms of the invention have been described above, they are to be understood as representative examples only without any limitation because various modifications within the scope of the invention will be readily apparent to a person skilled in the art.

## Claims

1. A clothing with a sag-preventive member,
wherein a layer sheet (1) comprising an adhesive layer (12) which has an adhesive strength or degree of tackiness and flexibility, and a film layer (11) which has flexibility, is installed on the clothing (2) with the film layer (11) facing the clothing (2).

2. The clothing according to claim 1,
wherein the layer sheet (1) is sewn on the clothing (2).

3. The clothing according to claim 1,
wherein the film layer (11) is made of hot-melt materials and the film layer (11) is welded on the clothing (2).

4. The clothing according to any of claims 1 to 3,
wherein the layer sheet (1) has vent holes (71).

5. A clothing with a sag-preventive member,
wherein a layer sheet (1), comprising an adhesive layer (12) which has an adhesive strength or degree of tackiness and flexibility, and a film layer (11) which has flexibility and is hot-meltable, is welded on the inner

6. A method for manufacturing a clothing (2) with a sag-preventive member,
wherein a layer sheet (1) is used which comprises an adhesive layer (12) which has an adhesive strength and flexibility, and a film layer (11) which has flexibility, and wherein the layer sheet (1) is installed on the clothing (2) with the film layer (11) facing the clothing (2).

7. The method according to claim 6,
wherein the layer sheet (1) is sewn on the clothing (2).

8. The method according to claim 6,
wherein the film layer (11) is a hot-melt material, and wherein the film layer (11) is welded on the clothing (2).

9. A method for manufacturing a clothing (2) with a sag-preventive member,
wherein a layer sheet (1) is used which comprises an adhesive layer (12) which has an adhesive strength or degree of tackiness and flexibility, and a film layer (11) which has flexibility and is hot-meltable,
wherein the layer sheet (1) is mounted to cover the peripheral surface of a core member (7) with the film layer (11) facing opposite to the peripheral surface of the core member (7),
wherein the peripheral surface of the core member (7) is mounted to face the inner surface of the clothing (2), and wherein the clothing (2) and the layer sheet (1) are heated and pressed against each other for welding the film layer (11) on the clothing (2).

10. A method for manufacturing a clothing (2) with a sag-preventive member,
wherein a core member (7) is covered with the clothing (2) with the inner surface of the clothing (2) wrapping around the peripheral surface of the core member (7),
wherein a layer sheet (1), comprising an adhesive layer (12) which has an adhesive strength or degree of tackiness and flexibility, and a film layer (11) which has flexibility and is hot-meltable, is placed on the core (7) with the film layer (11) facing the clothing (2), and wherein the clothing (2) and the layer sheet (1) are heated and pressed against each other in order to weld the film layer (11) on the clothing (2).

11. A device for manufacturing a clothing (2) with a sag-preventive member, comprising
a core member (7) which is adapted to be covered by the inner surface of a clothing (2),
a pressurizing member, which is adapted to press a layer sheet (1), comprising an adhesive layer (12) which has an adhesive strength or degree of tackiness and flexibility,
and a film layer (11) which has flexibility and is hot-meltable, and the clothing (2) to be welded together, and heating means (4) adapted to heat the film layer (11).
